# EUROPEAN PATENT APPLICATION

(11) **EP 4 714 731 A1**
(43) Date of publication of application: **25.03.2026**
(21) Application number: 25192999.8
(22) Date of filing: 31.07.2025
(51) Int. Cl.: B60L 53/63

(54) **CONTROL SYSTEM, CONTROL METHOD, AND PROGRAM**

(30) Priority: 24.09.2024 JP 2024165548
(71) Applicant: HONDA MOTOR CO., LTD., Tokyo 105-8404 (JP)
(72) Inventor: GODA, Ryuki, Tokyo, 1058404 (JP); SADANO, Hakaru, Tokyo, 1058404 (JP)
(74) Representative: Weickmann & Weickmann PartmbB

(57) **Abstract**

A control system processes reservations of a plurality of reservation targets. The control system includes a storage unit which stores characteristic information which indicates a characteristic of each of the plurality of reservation targets, a control information acceptance unit which accepts control information for processing the reservations of the plurality of reservation targets by taking into account the characteristics of the plurality of reservation targets, a reservation request acceptance unit which accepts a reservation request related to at least any of the plurality of reservation targets, and a reservation processing unit which allows, when the control information is first information, a reservation of a reservation target having a first characteristic based on the characteristic information and does not allow, when the control information is second information, the reservation of the reservation target having the first characteristic.

## Description

### BACKGROUND

### 1. TECHNICAL FIELD

The present invention relates to a control system, a control method, and a program.

### 2. RELATED ART

Patent document 1 discloses a technique to externally use electric power of a battery of a vehicle.

Cited document 2 discloses a technique related to dispatch management.

### RELATED ART DOCUMENTS

### Patent documents

Patent Document 1: International Publication No. 2024/070109
Patent Document 2: Japanese Patent Application Publication No. 2014-032459

It is desired that a reservation of a reservation target is to be processed in an appropriate manner.

### SUMMARY

A first aspect of the present invention provides a control system. The control system processes reservations of a plurality of reservation targets. The control system includes a storage unit which stores characteristic information which indicates a characteristic of each of the plurality of reservation targets. The control system includes a control information acceptance unit which accepts control information for processing the reservations of the plurality of reservation targets by taking into account the characteristics of the plurality of reservation targets. The control system includes a reservation request acceptance unit which accepts a reservation request related to at least any of the plurality of reservation targets. The control system includes a reservation processing unit which allows, when the control information is first information, a reservation of a reservation target having a first characteristic based on the characteristic information and does not allow, when the control information is second information, the reservation of the reservation target having the first characteristic.

In the above-described control system, the plurality of reservation targets may be vehicles.

In any of the above-described control systems, the characteristics of the plurality of reservation targets may be types of power of the vehicles.

In any of the above-described control systems, the reservation request may include at least a planned use time of the vehicle.

In any of the above-described control systems, when a vehicle to be used cannot be decided in response to the reservation request, in a case where the control information is the second information, the reservation processing unit may decide a vehicle to be used in response to the reservation request by performing at least a change of the planned use time of the vehicle.

In any of the above-described control systems, to decide a vehicle to be used in response to the reservation request, the reservation processing unit may hold held information including information indicating a vehicle to be used, information indicating a use time of the vehicle to be used, and information indicating at least one of: a starting point and a destination; a planned travel distance; a planned travel time; or a planned energy use amount of the vehicle to be used.

In any of the above-described control systems, the reservation processing unit may predict a transition of an energy amount available for travel of the vehicle based on the held information and decide the vehicle to be used in response to the reservation request based on the transition that is predicted of the energy amount available for the travel of the vehicle.

Any of the above-described control systems may further include an energy request acceptance unit which accepts energy request information related to a request of energy that is to be provided from the vehicle. The reservation processing unit may decide the vehicle to be used in response to the reservation request by taking into account the energy request information.

In any of the above-described control systems, the energy request information may include information indicating an energy amount and information indicating a time at which the energy is requested.

In any of the above-described control systems, the reservation processing unit may set a reservation of a vehicle to be used to perform energy transfer in at least one vehicle based on the energy request information.

In any of the above-described control systems, when the vehicle to be used in response to the reservation request and the vehicle to be used to perform the energy transfer cannot be decided, the reservation processing unit may decide the vehicle to be used in response to the reservation request further based on the control information.

Any of the above-described control systems may further include an input control unit which performs control for a user to input the control information.

In any of the above-described control systems, the input control unit may perform control to input the control information through a user interface which is different from a user interface through which the reservation request is accepted.

Any of the above-described control systems may include a user identification information acquisition unit which acquires identification information of a user. The input control unit may determine whether or not an input of the control information is allowed based on the identification information of the user which is acquired by the user identification information acquisition unit.

According to a second aspect of the present invention, there is provided a control method. The control method is for processing reservations of a plurality of reservation targets. The control method includes storing characteristic information which indicates a characteristic of each of the plurality of reservation targets. The control method includes accepting control information for processing the reservations of the plurality of reservation targets by taking into account the characteristics of the plurality of reservation targets. The control method includes accepting a reservation request related to at least any of the plurality of reservation target. The control method may include allowing, when the control information is first information, a reservation of a reservation target having a first characteristic based on the characteristic information and not allowing, when the control information is second information, the reservation of the reservation target having the first characteristic.

According to a third aspect of the present invention, a program is provided. The program causes, when executed by a computer, the computer to function as any of the above-described control systems.

The summary clause of the invention described above does not describe all necessary features of the present invention. The present invention may also be a sub-combination of the features described above.

### BRIEF DESCRIPTION OF THE DRAWINGS

Fig. 1 conceptually illustrates a utilization form of a system 5 in an embodiment.
Fig. 2 illustrates an example of a system configuration of a vehicle management apparatus 60.
Fig. 3 illustrates an example of a system configuration of an integrated management apparatus 50.
Fig. 4 illustrates an execution sequence of processing in a method performed by an electric power control apparatus 40, the integrated management apparatus 50, and the vehicle management apparatus 60.
Fig. 5 is a first example of an operation plan that is planned without allowing a reservation of a vehicle 10d.
Fig. 6 is an example of the operation plan in which the reservation of the vehicle 10d is allowed.
Fig. 7 is a second example of the operation plan that is planned without allowing the reservation of the vehicle 10d.
Fig. 8 is an example of the operation plan in which the reservation of the vehicle 10d is allowed.
Fig. 9 is a flowchart related to processing of inputting control information and a reservation request in the system 5.
Fig. 10 is a flowchart related to the processing performed in the integrated management apparatus 50.
Fig. 11 illustrates an example of a computer 2000.

### DESCRIPTION OF EXEMPLARY EMBODIMENTS

The present invention will be described below through embodiments of the invention, but the following embodiments do not limit the invention according to the claims. In addition, not all combinations of features described in the embodiments are essential to a solution of the invention.

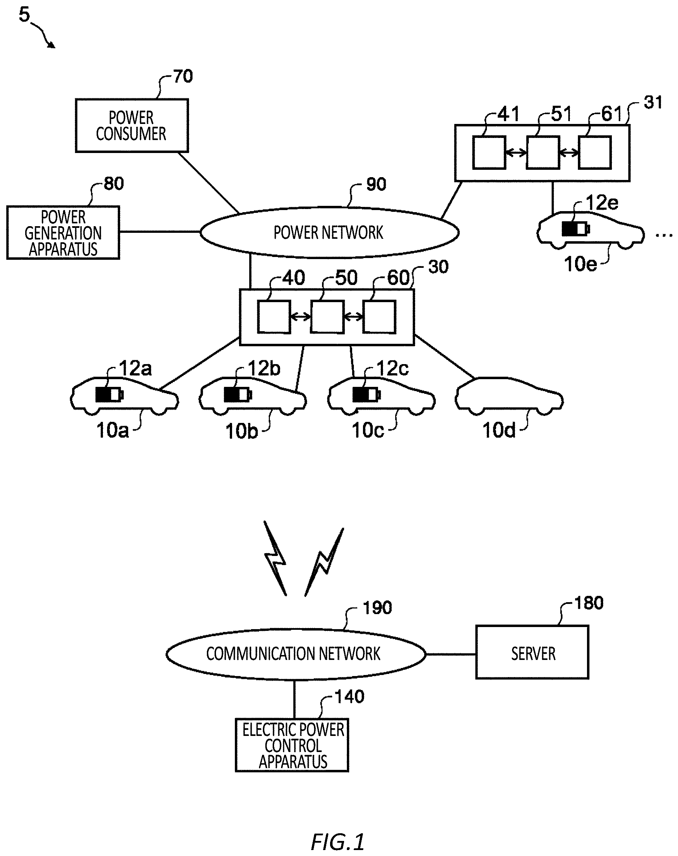

Fig. 1 conceptually illustrates a utilization form of a system 5 in an embodiment. The system 5 includes a power generation apparatus 80, a plurality of vehicles including a vehicle 10a, a vehicle 10b, a vehicle 10c, a vehicle 10d, and a vehicle 10e, an electric power control apparatus 40 and an electric power control apparatus 41, an integrated management apparatus 50 and an integrated management apparatus 51, a vehicle management apparatus 60 and a vehicle management apparatus 61, an electric power control apparatus 140, and a server 180.

A power consumer 70 and the power generation apparatus 80 are connected to a power network 90. The electric power generated by the power generation apparatus 80 can be supplied to the power consumer 70 through the power network 90. The power network 90 is an electric power system, for example.

The vehicle 10a, the vehicle 10b, the vehicle 10c, and the vehicle 10e are electric vehicles including a battery 12a, a battery 12b, a battery 12c, and a battery 12e which accumulate drive electric power for vehicle travel, respectively. The electric vehicle is an example of an electrically-driven vehicle. The electric vehicle is an example of a movable body. The vehicle 10d is a vehicle having an internal combustion engine. The vehicle 10d is a vehicle which travels by power generated by the internal combustion engine. The vehicle 10d may be a vehicle which travels mainly by the power generated by the internal combustion engine. The vehicle 10d may be a vehicle which does not have a battery that generates power for travel. In the present embodiment, in particular, the vehicle 10a, the vehicle 10b, the vehicle 10c, and the vehicle 10d may be together referred to as a "vehicle 10", and the battery 12a, the battery 12b, and the battery 12c may be together referred to as a "battery 12".

The vehicle 10 is deployed in a business establishment 30. The business establishment 30 functions as a home point for parking the vehicle 10. In the present embodiment, the business establishment 30 may be referred to as a "headquarter". The vehicle 10 may be, for example, a vehicle for commercial use or may be a vehicle for carrying shipments such as products handled by the business establishment 30. Electric power is supplied to the business establishment 30 through the power network 90.

The electric power control apparatus 40, the integrated management apparatus 50, and the vehicle management apparatus 60 are provided in the business establishment 30. The vehicle 10 is provided to be able to communicate with the vehicle management apparatus 60 through a mobile communication network or the like. The business establishment 30 has a local power network in the business establishment and can perform electric power transfer with the battery 12 included in the vehicle 10 through a charge and discharge device provided in the business establishment 30. That is, the vehicle 10 can be used for energy management in the business establishment 30. The battery 12 included in the vehicle 10 can perform the electric power transfer with the power network 90 through a power network in the business establishment 30. The electric power control apparatus 40 controls charging and discharging of the vehicle 10 deployed in the business establishment 30 so as to at least satisfy a power demand in the business establishment 30.

The electric power control apparatus 40, the integrated management apparatus 50, and the vehicle management apparatus 60 are managed, for example, in the business establishment 30. The electric power control apparatus 40 and the integrated management apparatus 50 are provided to be able to communicate with each other through a communication line. The integrated management apparatus 50 and the vehicle management apparatus 60 are provided to be able to communicate with each other through a communication line. The integrated management apparatus 50 and the vehicle management apparatus 60 may be provided outside the business establishment 30. The integrated management apparatus 50 and the vehicle management apparatus 60 may be provided to be able to communicate with each other through a communication line such as the Internet. One or both of the integrated management apparatus 50 and the vehicle management apparatus 60 may be embodied as a server such as a cloud server.

The vehicle management apparatus 60 decides a time of day at which the vehicle 10 departs from the business establishment 30 and a time of day at which the vehicle 10 returns to the business establishment. The integrated management apparatus 50 performs an arbitration to adjust a time of day at which the vehicle 10 departs from the business establishment 30 and a time of day at which the vehicle 10 returns to the business establishment 30 to meet a power demand in the business establishment 30. For example, the integrated management apparatus 50 performs the arbitration to adjust the time of day at which the vehicle 10 departs from the business establishment 30 and the time of day at which the vehicle 10 returns to the business establishment 30 so that peak shave of the power demand in the business establishment 30 can be performed. The vehicle management apparatus 60 manages the vehicle 10 based on the schedule of the vehicle 10 adjusted by the integrated management apparatus 50. The electric power control apparatus 40 controls charging and discharging of the battery 12 included in the vehicle 10 based on the schedule of the vehicle 10 adjusted by the integrated management apparatus 50.

The vehicle 10e is deployed in a business establishment 31. The business establishment 31 functions as a home point for parking the vehicle 10e. Similarly as in the vehicle 10, the vehicle 10e may be a vehicle for commercial use or may be a vehicle for carrying shipments such as products handled by the business establishment 30. Electric power is supplied to the business establishment 31 through the power network 90. The electric power control apparatus 41, the integrated management apparatus 51, and the vehicle management apparatus 61 are provided in the business establishment 31.

In the business establishment 31, the electric power control apparatus 41, the integrated management apparatus 51, and the vehicle management apparatus 61 correspond to the electric power control apparatus 40, the integrated management apparatus 50, and the vehicle management apparatus 60. The electric power control apparatus 41, the integrated management apparatus 51, and the vehicle management apparatus 61 perform control similar to that of the electric power control apparatus 40, the integrated management apparatus 50, and the vehicle management apparatus 60 except that a control target and/or a management target are the business establishment 31 and/or the vehicle 10e. For this reason, description of the control related to the electric power control apparatus 41, the integrated management apparatus 51, the vehicle management apparatus 61, and the vehicle 10 is omitted.

The electric power control apparatus 140 communicates with the electric power control apparatus 40 and the electric power control apparatus 41 through a communication network 190, and supervises overall electric power control in the business establishment 30 and the business establishment 31. For example, the electric power control apparatus 140 collects information related to power supply and demand from the electric power control apparatus 40 and the electric power control apparatus 41, and adjusts overall power supply and demand including electric power transaction with the power network 90, so that the electric power control apparatus 40 and the electric power control apparatus 41 are caused to perform control so as to minimize the total power cost of the business establishment 30 and the business establishment 31.

The electric power control apparatus 140 is connected to the server 180 through the communication network 190. The server 180 is, for example, a server used by an electric power aggregator. The server 180 conducts electric power transaction in an electricity market. The electric power control apparatus 140 can provide the server 180 with electric power resources which are held by aggregating the vehicles deployed in the business establishment 30 and the business establishment 30. The electric power control apparatuses 40 and 41 control charge and discharge of the battery of each of the vehicles deployed in the business establishment 30 and the business establishment 31, and the electric power control apparatus 140 provides electric power agreed by the server 180. For example, according to the demand from the server 180, the electric power control apparatus 140 controls the electric power control apparatus 40 and charging and discharging of the battery 12 controlled by the electric power control apparatus 40, and provides electric power corresponding to the demand.

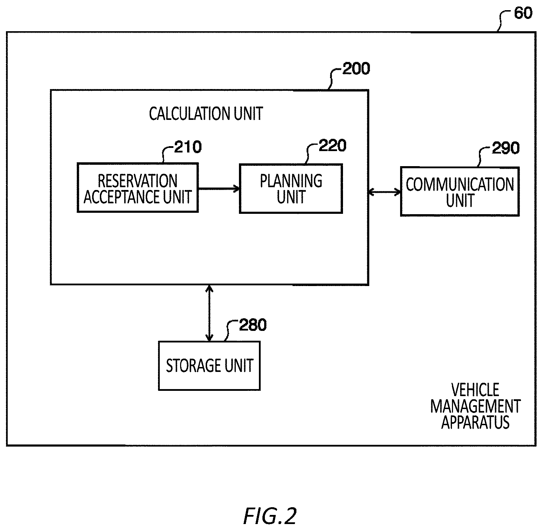

The control mainly related to the business establishment 30 will be described in connection to Fig. 2 to Fig. 10 or the like. Specifically, control related to the electric power control apparatus 40, the integrated management apparatus 50, the vehicle management apparatus 60, and the vehicle 10 is described. However, the control related to the business establishment 30 can be applied to the control related to the business establishment 31.

Fig. 2 illustrates an example of a system configuration of the vehicle management apparatus 60. The vehicle management apparatus 60 includes a calculation unit 200, a storage unit 280, and a communication unit 290.

The calculation unit 200 performs control of the communication unit 290. The communication unit 290 is responsible for communication between the vehicle 10 and the integrated management apparatus 50 or the like. The calculation unit 200 is embodied as a computing apparatus including a processor. Each storage unit 280 is embodied including a non-volatile storage medium. The calculation unit 200 performs processing by using the information stored in the storage unit 280. The calculation unit 200 may be embodied as a microcomputer including a CPU, a ROM, a RAM, an I/O, a bus, and the like. The vehicle management apparatus 60 may be embodied as a computer.

In the present embodiment, the vehicle management apparatus 60 shall be embodied as a single computer. However, in another embodiment, the vehicle management apparatus 60 may be embodied as a plurality of computers. At least some of the functions of the vehicle management apparatus 60 may be achieved by one or more servers such as a cloud server.

The calculation unit 200 includes a reservation acceptance unit 210 and a planning unit 220. The reservation acceptance unit 210 accepts reservation information for reserving the vehicle 10. The storage unit 280 stores the reservation information. The reservation information includes selection information for a user to select the vehicle 10 to be used among the plurality of vehicles 10.

The planning unit 220 prepares a use plan of the vehicle 10 based on the information stored in the storage unit 280. For example, the planning unit 220 prepares an operation plan indicating which user is let to use the vehicle 10 based on the selection information stored in the storage unit 280.

The communication unit 290 transmits the operation plan to the integrated management apparatus 50. The communication unit 290 may further transmit at least a part of the reservation information to the integrated management apparatus 50. When the vehicle 10 to be used by the user is changed through an arbitration of conflicting reservations, the communication unit 290 may transmit a notification indicating that the vehicle 10 is changed to the user who has the reservation of the vehicle 10 that has been changed.

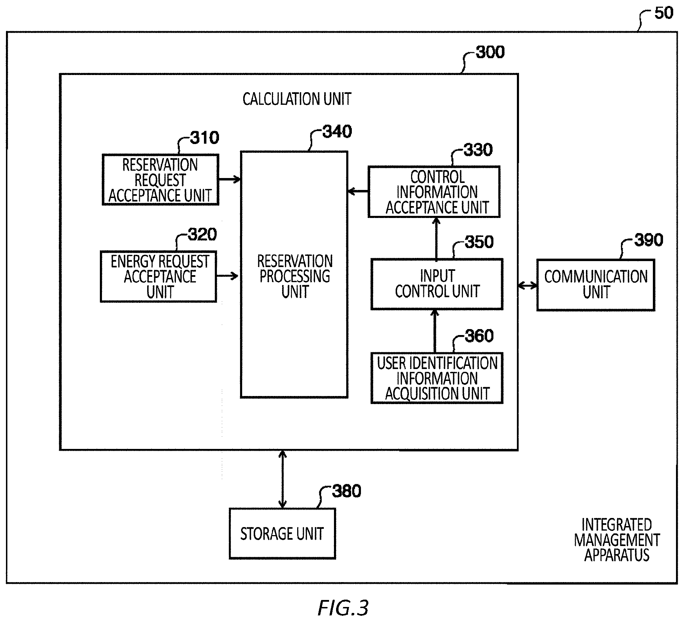

Fig. 3 illustrates an example of a system configuration of the integrated management apparatus 50. The integrated management apparatus 50 includes a calculation unit 300, a storage unit 380, and a communication unit 390.

The calculation unit 300 performs control of the communication unit 390. The communication unit 390 is responsible for communication in the integrated management apparatus 50. The communication unit 390 is responsible for communication between at least the electric power control apparatus 140, the vehicle management apparatus 60, and the electric power control apparatus 40 and the integrated management apparatus 50. The calculation unit 300 is embodied as a computing apparatus including a processor. Each storage unit 380 is embodied including a non-volatile storage medium. The calculation unit 300 performs processing by using the information stored in the storage unit 380. The calculation unit 300 may be embodied as a microcomputer including a CPU, a ROM, a RAM, an I/O, a bus, and the like. The integrated management apparatus 50 may be embodied as a computer.

In the present embodiment, the integrated management apparatus 50 shall be embodied including a single computer. However, in another embodiment, the integrated management apparatus 50 may be achieved by a plurality of computers. At least some of the functions of the integrated management apparatus 50 may be embodied including one or more servers such as a cloud server. In the present embodiment, the integrated management apparatus 50 and the vehicle management apparatus 60 may be embodied as a same computer or may be embodied as computers different from each other. All or at least some of functions of the integrated management apparatus 50 and the vehicle management apparatus 60 may be achieved by the same computer.

The calculation unit 300 includes a reservation request acceptance unit 310, an energy request acceptance unit 320, a control information acceptance unit 330, a reservation processing unit 340, an input control unit 350, and a user identification information acquisition unit 360.

The integrated management apparatus 50 functions as at least a part of a control system which processes reservations of a plurality of reservation targets. The storage unit 380 stores characteristic information indicating a characteristic of each of the plurality of reservation targets. The control information acceptance unit 330 accepts control information for processing the reservations of the plurality of reservation targets by taking into account the characteristics of the plurality of reservation targets. The reservation request acceptance unit 310 accepts a reservation request related to at least any of the plurality of reservation targets. The reservation processing unit 340 allows a reservation of a reservation target having a first characteristic based on the characteristic information when the control information is first information, and does not allow the reservation of the reservation target having the first characteristic when the control information is second information.

The plurality of reservation targets may be the vehicles 10. The characteristics of the plurality of reservation targets are types of power of the vehicles 10. The reservation request includes at least a planned use time of the vehicle 10.

When the vehicle 10 to be used in response to the reservation request cannot be decided, in a case where the control information is the second information, the reservation processing unit 340 decides the vehicle 10 to be used in response to the reservation request by performing at least a change of the planned use time of the vehicle 10. To decide the vehicle 10 to be used in response to the reservation request, the reservation processing unit 340 may hold held information including (i) information indicating the vehicle 10 to be used, (ii) information indicating a use time of the vehicle 10 to be used, and (iii) information indicating at least one of a starting point and a destination, a planned travel distance, a planned travel time, or a planned energy use amount of the vehicle 10 to be used. The held information may be acquired from the vehicle management apparatus 60.

The reservation processing unit 340 may predict a transition of an energy amount available for travel of the vehicle 10 based on the held information and decide the vehicle 10 to be used in response to the reservation request based on the transition that is predicted of the energy amount available for the travel of the vehicle 10.

The energy request acceptance unit 320 accepts energy request information related to a request of energy that is to be provided from the vehicle 10. For example, the energy request acceptance unit 320 accepts the energy request information from the electric power control apparatus 40. The energy request information may include information indicating an energy amount and information indicating a time at which the energy is requested. The reservation processing unit 340 decides the vehicle 10 to be used in response to the reservation request by taking into account the energy request information. According to the present embodiment, the energy request is a request of electric power transfer with the business establishment 30 for the vehicle 10.

The reservation processing unit 340 sets a reservation of the vehicle 10 to be used to perform the energy transfer in at least one vehicle 10 based on the energy request information. When the vehicle 10 to be used in response to the reservation request and the vehicle 10 to be used to perform the energy transfer cannot be decided, the reservation processing unit 340 decides the vehicle 10 to be used in response to the reservation request further based on the control information.

The input control unit 350 performs control for the user to input the control information. The input control unit 350 performs control to input the control information through a user interface different from a user interface through which the reservation request is accepted. The user identification information acquisition unit 360 acquires identification information of the user. The input control unit 350 determines whether or not an input of the control information is allowed based on the identification information of the user which is acquired by the acquisition unit.

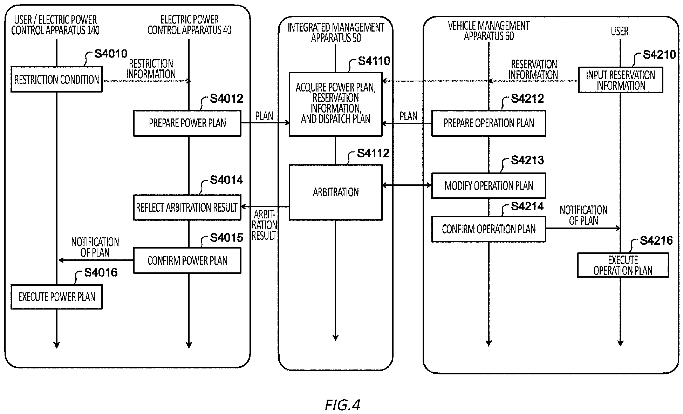

Fig. 4 illustrates an execution sequence of processing in a method performed by the electric power control apparatus 40, the integrated management apparatus 50, and the vehicle management apparatus 60. The processing of Fig. 4 represents processing from preparation of a power plan and an operation plan on a particular date until various types of control are performed according to the prepared plans. The preparation of the power plan and the operation plan is performed on a day before the target particular date or at a relatively early time on the particular date. For example, the processing of Fig. 4 may be started at 0:00 on the particular date.

As the control related to the electric power control apparatus 40, in S4010, at least one of the user of the electric power control apparatus 40 or the electric power control apparatus 140 sets a restriction condition related to the power plan in the business establishment 30 and notifies the electric power control apparatus 40 of the restriction condition. The electric power control apparatus 140 may set the restriction condition in the business establishment 30 so as to minimize the overall power cost in the business establishment 31 and the business establishment 30. The user is a person or a system that inputs information related to management of electric power in the business establishment 30 to the electric power control apparatus 40. The restriction condition is a condition which becomes a restriction for the preparation of the power plan. The restriction condition may include a restriction which is required to meet the power demand. The restriction condition includes, for example, a predicted power generation amount, a predicted power consumption amount, and information related to an electricity charge. The power generation amount is, for example, a power generation amount in the power generation apparatus 80. The power consumption amount is a power consumption amount in the business establishment 30. The electricity charge includes a power purchase price, a power selling price, and a consideration value obtained by reducing the power consumption according to a demand response. The power purchase price is, for example, a condition related to an amount of money imposed as a consideration value for power reception by the business establishment 30 from the power network 90. The power selling price is, for example, a condition related to an amount of money obtained as a consideration value for power supply by the business establishment 30 to the power network 90.

In S4012, the electric power control apparatus 40 prepares the power plan on the day in the business establishment 30 based on the restriction information. The power plan includes a power consumption amount for each timeframe in one day. The power plan determines how much electric power is consumed for each timeframe in the business establishment 30. The power consumption amount for each timeframe on the day may be predicted from environmental information such as weather information on the day and past performance data. The power plan may include peak shave information to perform peak shave. The peak shave information may include information indicating how much power consumption is to be suppressed during what timeframe in the business establishment 30. The peak shave information may include information indicating how much electric power is to be received from the outside during what timeframe in the business establishment 30.

The electric power control apparatus 40 may prepare an optimal power plan in the business establishment 30. For example, the electric power control apparatus 40 may prepare a power plan so as to minimize the amount of electric power received from the power network 90 in the business establishment 30. The electric power control apparatus 40 may prepare a power plan so as to minimize the amount of money imposed as a consideration value for power reception in the business establishment 30 from the power network 90. Under a condition of compliance with contracted electric power in at least the business establishment 30, the electric power control apparatus 40 may prepare the power plan so as to maximize an amount of money obtained as a consideration value for reducing the power consumption in the business establishment 30 according to the demand response in the business establishment 30 or performing power supply to the power network 90. In this manner, the electric power control apparatus 40 prepares the optimal power plan as the power plan on the day in the business establishment 30 based on the restriction condition. According to this power plan, the amount of electric power which needs to be received from the outside in each timeframe on the day is set. The amount of electric power which needs to be received from the outside may be supplied from the battery 12 included in the vehicle 10 parking in the business establishment 30. The electric power control apparatus 40 transmits the prepared power plan to the integrated management apparatus 50.

As the control related to the vehicle management apparatus 60, in S4210, the user inputs reservation information related to the dispatch of the vehicle 10. The user is a person who uses the vehicle 10, an administrator of a system, the system, or the like. The reservation information includes a condition which may become a restriction on preparation of the operation plan. The reservation information includes, for example, a starting point, a destination, and a returning point, a departure time at the starting point, an arrival time and a departure time at the destination, an arrival time at the returning point, and the like. The starting point and the destination determine from which location to which location the vehicle 10 needs to travel. For the departure time at the starting point and the arrival time at the returning point, a time adjustment allowance amount which indicates an amount of time that the departure time and the arrival time may be allowed to change may be set. The reservation information input in S4210 is transmitted to the vehicle management apparatus 60 and also transmitted to the integrated management apparatus 50 through the vehicle management apparatus 60.

In S4212, the planning unit 220 of the vehicle management apparatus 60 prepares the operation plan on the day in the business establishment 30 by aggregating the restriction conditions notified from the user. For example, the planning unit 220 decides the vehicle 10 to be used to transport people, a travel route of the vehicle 10, and a travel speed of the vehicle 10 such that a transport demand set by the reservation information is met. The vehicle management apparatus 60 transmits the prepared operation plan to the integrated management apparatus 50.

In S4110, the integrated management apparatus 50 accepts the power plan transmitted from the electric power control apparatus 40 and the reservation information and the operation plan transmitted from the vehicle management apparatus 60.

In S4112, the reservation processing unit 340 of the integrated management apparatus 50 determines whether or not the power plan in the business establishment 30 is to be met when the vehicle 10 is operated according to the operation plan. For example, the operation plan determines a period in which the vehicle 10 is predicted to exist in the business establishment 30. During a period in which the business establishment 30 requires the power supply from the outside, when it can be predicted that the electric power is received from the battery 12 included in the vehicle 10 existing in the business establishment 30 during the period, the reservation processing unit 340 determines that the power plan is met.

In a case where it is determined that the power plan cannot be met when dispatch of a vehicle is performed according to the operation plan, the reservation processing unit 340 determines how the operation plan can be modified to meet the power plan. For example, the reservation processing unit 340 decides adjustment amounts of the departure time and the arrival time of the vehicle 10 in the operation plan.

The integrated management apparatus 50 transmits modification information including the decided adjustment amounts of the departure time and the arrival time to the vehicle management apparatus 60. When the modification information is received from the integrated management apparatus 50, the planning unit 220 of the vehicle management apparatus 60 modifies the operation plan prepared in S4212 based on the modification information (S4213). For example, the planning unit 220 modifies the operation plan so as to meet the reservation information based on the adjustment amounts of the departure time and the arrival time received from the integrated management apparatus 50. The vehicle management apparatus 60 transmits a modification result of the operation plan to the integrated management apparatus 50. The integrated management apparatus 50 and the vehicle management apparatus 60 repeat processes in S4112 and S4213 to decide the performable operation plan. In S4213, when the operation route of the vehicle 10 is decided and the vehicle 10 is caused to travel such that the departure time and the arrival time designated by the reservation information can be complied, the planning unit 220 decides the performable operation plan by determining whether or not the vehicle 10 can return to the business establishment 30 without running out of the electric power based on an SOC and an electric power consumption rate of the vehicle 10. In addition, in S4112, the reservation processing unit 340 may determine that the operation plan is performable under a condition that it is determined that an overall profit is to be obtained by taking into account an electric power cost reduction amount of the business establishment 30 which is obtained when the electric power transfer is performed between the battery 12 and the business establishment 30 according to the decided power plan and an operating cost of the vehicle 10 which is required when the operation of the vehicle 10 is performed according to the operation plan and an operating rate of the vehicle 10.

When the operation plan is decided, an arbitration result including the operation plan is transmitted to the electric power control apparatus 40. When receiving the arbitration result from the integrated management apparatus 50, the electric power control apparatus 40 reflects the arbitration result in the power plan based on the arbitration result (S4014), and notifies the user of the power plan confirmed by reflecting the arbitration result (S4015). In S4016, the user and the electric power control apparatus 140 execute the control according to the notified power plan.

The vehicle management apparatus 60 confirms the operation plan finally decided in S4213 (S4214) and notifies the user of the confirmed operation plan through the communication unit 290. In S4216, the user performs the operation control of the vehicle 10 according to the notified operation plan.

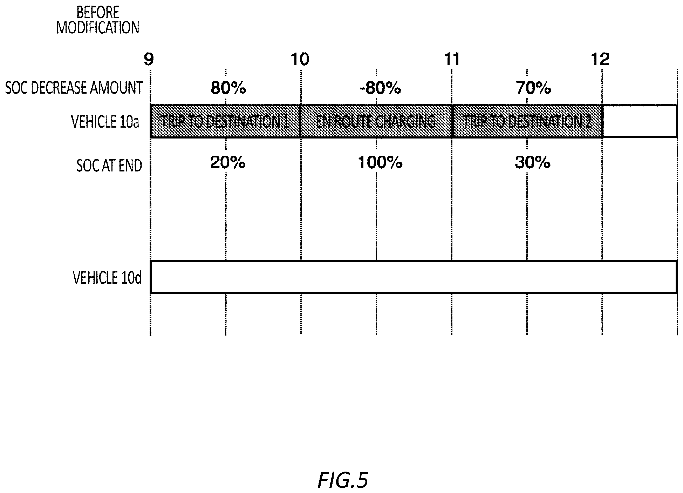

Fig. 5 is a first example of the operation plan that is planned when the reservation of the vehicle 10d is not allowed. Here, it is assumed that the user performs the reservation request to depart from the business establishment 30 at 9:00 for a trip to the "destination 1" and the "destination 2" and return to the business establishment 30.

The reservation processing unit 340 predicts a transition of the SOC of the battery 12a caused by the use of the vehicle 10a based on the held information generated based on the reservation request. The held information includes, for example, (i) information indicating the vehicle 10 to be used, (ii) information indicating a use time of the vehicle 10 to be used, and information indicating at least one of a starting point and a destination (including a transit point), a planned travel distance, a planned travel time, or a planned energy use amount of the vehicle 10 to be used.

For example, the reservation processing unit 340 searches for a route from the business establishment 30 to the destination 1, a route from the destination 1 to the destination 2, and a route from the destination 2 to the business establishment 30 based on the starting point and the destination included in the held information. The reservation processing unit 340 estimates an energy amount required for the vehicle 10a to travel the searched route and calculates a decrease amount of the SOC of the battery 12a when the vehicle 10a travels the searched route based on the estimated energy amount and a capacity of the battery 12a. Accordingly, the reservation processing unit 340 predicts the transition of the SOC of the battery 12a. As a result, for example, as illustrated in Fig. 5, since the SOC of the battery 12a at the time of departure of the business establishment 30 is 100% and the SOC of the battery 12a decreases by 80% by the trip to the destination 1, the SOC of the battery 12a is calculated to decrease to 20%.

When it is determined that the vehicle 10a cannot return to the business establishment 30 without the charging due to the decrease in the SOC of the battery 12a, the reservation processing unit 340 generates a plan to perform the charging until the battery 12a is fully charged between 10:00 and 11:00 on the route for a trip from the destination 1 to the destination 2. According to the present embodiment, a need of charging of the battery 12 between the departure of the vehicle 10 from the business establishment 30 and the return to the business establishment 30 is referred to as "en route charging".

The reservation processing unit 340 calculates the SOC of the battery 12a to decrease by 70% between the trip to the destination 2 by the vehicle 10a after the battery 12a is charged and the return to the business establishment 30, and calculates the SOC of the battery 12a to be at 30% when the vehicle 10a returns to the business establishment 30. As illustrated in Fig. 5, when the en route charging occurs, the user of the vehicle 10a needs to wait until the battery 12a is charged.

In this manner, in general, since an electric vehicle is not suitable for a long distance operation, to travel a long distance, the en route charging may be required in many cases. In particular, when the vehicle 10 is used for business, an issue is that it may be often a large loss of time to perform the en route charging.

According to the present embodiment, the control information acceptance unit 330 accepts control information for processing the reservations by taking into account the characteristic of the vehicle 10 which is input by the administrator. According to the present embodiment, the control information is information indicating whether or not the reservation of the vehicle 10d having an internal combustion engine is allowed.

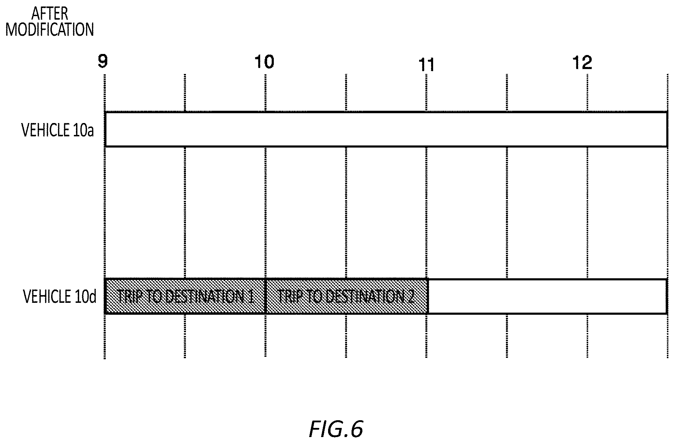

Fig. 6 is an example of the operation plan in which the reservation of the vehicle 10d is allowed. When the operation plan including road charging as illustrated in Fig. 5 is generated, the reservation processing unit 340 refers to the control information and determines that the reservation of the vehicle 10d is allowed when the control information is the first control information.

When the control information is the first control information, the reservation processing unit 340 allows the vehicle 10d to process the reservation. Accordingly, by selecting the vehicle 10d as the vehicle 10 to be used for a trip to a destination 1 and a destination 2, the reservation processing unit 340 can generate the planned in which the en route charging does not occur. For this reason, it may suppress generation of the loss which may be generated when the user waits for the charging of the vehicle 10.

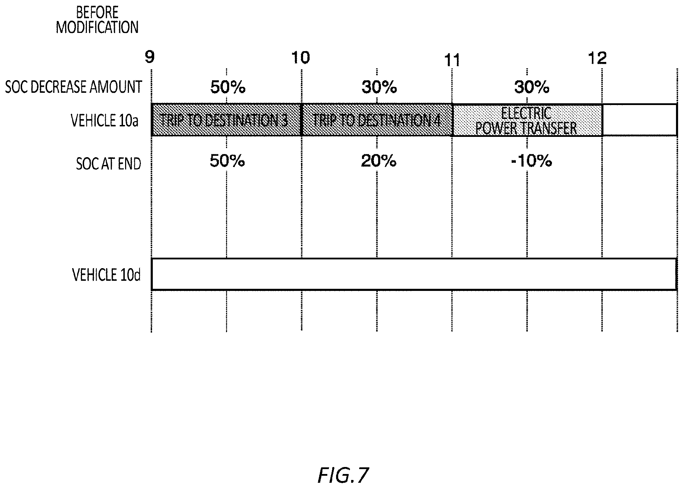

Fig. 7 is a second example of the operation plan that is planned when the reservation of the vehicle 10d is not allowed. Here, it is assumed that a reservation request to depart from the business establishment 30 at 9:00 for a trip to a "destination 3" and return to the business establishment 30 and a reservation request to depart from the business establishment at 10:00 for a trip to a "destination 4" and return to the business establishment 30 are performed, and an operation plan is prepared to use the vehicle 10a in response to the two reservation requests.

The reservation processing unit 340 searches for a route to depart from the business establishment 30 for the trip to the destination 3 and return to the business establishment 30 and a route to depart from the business establishment 30 for the trip to the destination 4 and return to the business establishment 30. The reservation processing unit 340 calculates a decrease amount of the SOC of the battery 12a when the vehicle 10a travels the searched route. As illustrated in Fig. 7, the reservation processing unit 340 performs a calculation such that the SOC of the battery 12a at the time of departure from the business establishment 30 is 100% and the SOC of the battery 12a decreases by 50% from the trip to the destination 3 until the return to the business establishment 30. Accordingly, the SOC of the battery 12a when the vehicle 10a returns to the business establishment 30 at 10:00 is calculated to be 50%.

Subsequently, the reservation processing unit 340 performs a calculation such that the SOC of the battery 12a decreases by 30% after the vehicle 10a departs from the business establishment 30 for the trip to the destination 4 until the return to the business establishment 30. Accordingly, it is assumed that the SOC of the battery 12a is calculated to be 20% when the vehicle 10a returns to the business establishment 30 at 11:00.

Here, the battery 12a of the vehicle 10a is reserved to be used for the electric power transfer with the business establishment 30 between 11:00 and 12:00 from the power plan based on the energy request information from the electric power control apparatus 40. In the example of Fig. 7, from the energy amount information included in the energy request information, the electric energy of 30% of the SOC needs to be provided from the battery 12a through the electric power transfer between the battery 12a and the business establishment 30, and there is a chance that the electric energy accumulated in the battery 12a becomes insufficient (that is, the electric energy provided to the business establishment 30 becomes insufficient). Accordingly, there is a chance that the electric energy required in the business establishment 30 cannot be sufficiently provided.

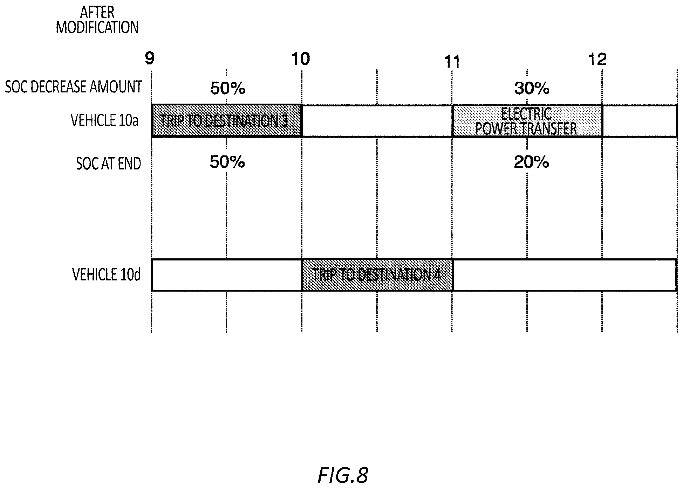

Fig. 8 is an example of the operation plan in which the reservation of the vehicle 10d is allowed. As illustrated in Fig. 7, in a case where the vehicle 10a is reserved to be used for operation before and after a period in which the use for the electric power transfer with the business establishment 30 is reserved, the reservation processing unit 340 refers to the control information and determines that the reservation of the vehicle 10d is allowed when the control information is the first control information.

When the control information is the first control information, the reservation processing unit 340 allows the vehicle 10d to process the reservation. Accordingly, the reservation processing unit 340 selects the vehicle 10d as the vehicle 10 to be used before the period in which the use for the electric power transfer with the business establishment 30 is reserved. For example, the reservation processing unit 340 selects the vehicle 10d as the vehicle 10 to be used for the trip to the destination 4 immediately before the period in which the use for the electric power transfer with the business establishment 30 is reserved. Accordingly, even when the SOC decreases by 30% through the electric power transfer between the vehicle 10a and the business establishment 30, the SOC is at 20% at the end of the electric power transfer with the business establishment 30. Note that instead of the selection of the vehicle 10d as the vehicle 10 to be used for the trip to the destination 4 or in addition to the selection of the vehicle 10d as the vehicle 10 to be used for the trip to the destination 4, the reservation processing unit 340 may select the vehicle 10d as the vehicle 10 to be used for the trip to the destination 3. In this manner, since the reservation of the vehicle 10d is allowed, it is possible for the vehicle 10a to provide the electric energy required in the business establishment 30.

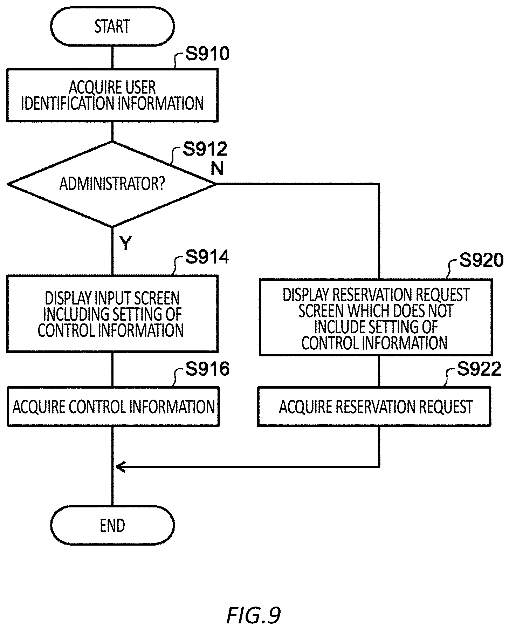

Fig. 9 is a flowchart related to processing of inputting the control information and the reservation request in the system 5. A user can access the integrated management apparatus 50 through a communication terminal such as a personal computer and a mobile terminal. When the user accesses the integrated management apparatus 50, in S910, the user identification information acquisition unit 360 acquires identification information of the user. The user identification information acquisition unit 360 acquires the identification information of the user based on, for example, login information.

In S912, the input control unit 350 determines whether or not the user is an administrator. In S912, when it is determined that the user is the administrator, in S914, the input control unit 350 causes an input screen including a setting of the control information to be displayed on the communication terminal. The input screen including the setting of the control information is an example a user interface through which the control information is input. In S916, the control information acceptance unit 330 acquires the control information input through the input screen including the setting of the control information. The input control information is stored in the storage unit 380.

In S912, when it is determined that the user is not the administrator, in S920, the input control unit 350 causes a reservation request screen for inputting the reservation request which does not include the setting of the control information to be displayed on the communication terminal. The input control unit 350 may cause the reservation request screen to be displayed on the communication terminal by redirecting the request to the vehicle management apparatus 60, for example. The reservation request screen is an example of the user interface through which the reservation request is accepted. Subsequently, in S922, the vehicle management apparatus 60 acquires a reservation request from the user.

As described in connection to Fig. 9, the input control unit 350 performs the control for the administrator to input the control information. In particular, the input control unit 350 performs the control to input the control information through a user interface different from the user interface through which the reservation request is accepted. Accordingly, it is possible to adopt a configuration in which the user other than the administrator cannot input the control information.

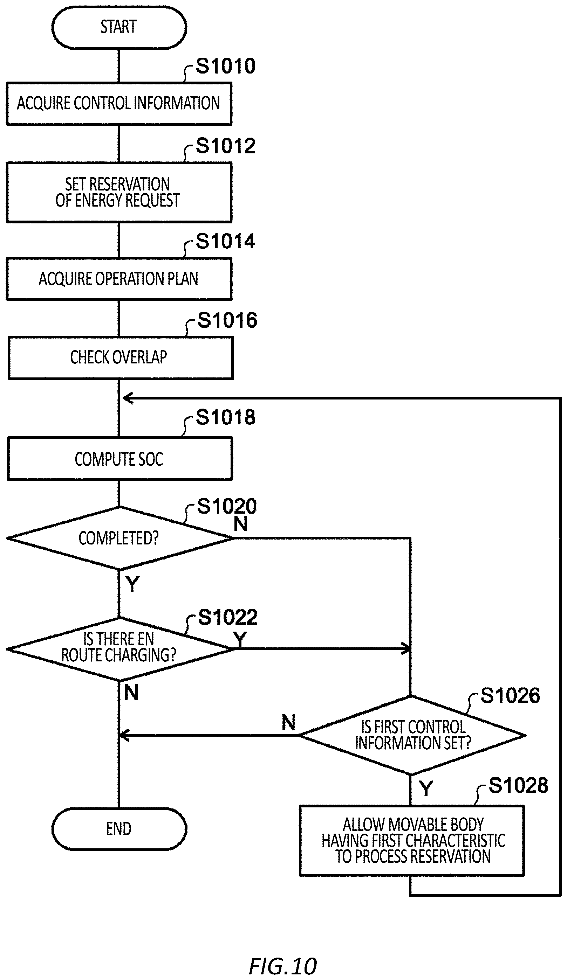

Fig. 10 is a flowchart related to processing performed in the integrated management apparatus 50. In S1010, the reservation processing unit 340 acquires control information. For example, the reservation processing unit 340 acquires the control information from the storage unit 380.

In S1012, the electric power control apparatus 40 sets a reservation of the vehicle 10 based on the energy request information accepted by the energy request acceptance unit 320. The energy request information includes, for example, information indicating a period in which the vehicle 10 is to perform the electric power transfer with the business establishment 30 and information indicating an amount of electric power for which the electric power transfer is performed. In S1014, the reservation processing unit 340 acquires an operation plan. The reservation processing unit 340 may cause the vehicle management apparatus 60 to prepare an operation plan through an API provided by the vehicle management apparatus 60 and acquire the operation plan prepared by the vehicle management apparatus 60.

In S1016, the reservation processing unit 340 checks if the reservations of the vehicle 10 is not overlapped. For example, the reservation processing unit 340 checks if the reservation based on the energy request information and the reservation of the vehicle 10 indicated by the operation plan of the vehicle 10 are not overlapped. When the reservations of the vehicle 10 are overlapped, the reservation processing unit 340 may cancel the overlap by shifting a time of any of the reservations by a predetermined time.

In S1018, the reservation processing unit 340 computes the SOC of the vehicle 10. As described above, the reservation processing unit 340 searches for a travel route of the vehicle 10 and calculates electric energy required for the travel on the searched route to calculate a transition of the SOC of the vehicle 10 based on the calculated electric energy and the electric energy required for the reservation based on the energy request information. In the computation of the SOC, when the vehicle 10 having the SOC that becomes a predetermined value or less exists (for example, when the vehicle 10 having the SOC that becomes zero exists), the reservation processing unit 340 calculates the transition of the SOC of the battery 12 of the vehicle 10 by incorporating a plan to perform the en route charging for the vehicle 10.

In S1020, the reservation processing unit 340 determines whether or not the reservation is possible to be completed based on the transition of the SOC calculated in S1018. Specifically, the reservation processing unit 340 determines, based on the transition of the SOC calculated in S1018, whether or not both the operation of the vehicle 10 based on the reservation request of the vehicle 10 and the electric power transfer between the vehicle 10 and the business establishment 30 based on the energy request information can be achieved. More specifically, the reservation processing unit 340 determines, based on the transition of the SOC calculated in S1018, that both the operation of the vehicle 10 and the electric power transfer can be achieved based on whether or not the electric energy amount accumulated in the battery 12 of the vehicle 10 used for the operation and/or the electric power transfer becomes insufficient (that is, the electric energy amount required for the operation of the vehicle 10 and/or the electric energy provided to the business establishment 30 becomes insufficient). For example, the reservation processing unit 340 determines that the operation of the vehicle 10 and the electric power transfer cannot be achieved at the same time when the SOC of the vehicle 10 used for the operation or the electric power transfer reaches a predetermined lower limit value (for example, zero), and determines that both the operation of the vehicle 10 and the electric power transfer can be achieved when the SOC of the vehicle 10 used for the operation or the electric power transfer does not reach the predetermined lower limit value (for example, zero).

When it is determined that the reservation is possible to be completed in S1020, the reservation processing unit 340 determines whether or not the en route charging occurs in S1022. When the en route charging does not occur, the reservation of the vehicle 10 is confirmed, and the processing of this flowchart ends.

In a case (i) where it is determined that the reservation is not possible to be completed in S1020 or a case (ii) where it is determined that the en route charging occurs in S 1022, the reservation processing unit 340 determines whether or not the first control information is set as the control information by referring to the control information in S 1026. When it is determined that the first control information is set as the control information, the reservation processing unit 340 processes the reservation by allowing a movable body having a first characteristic in S1028. Specifically, the reservation processing unit 340 makes a modification to set a plan in which the vehicle 10d using an internal combustion engine for power is allowed. Upon completion of the process of S 1028, the flow proceeds to the process of S1018.

In this manner, when the vehicle 10 to be used in response to the reservation request and the vehicle 10 to be used to perform the electric power transfer with the business establishment 30 cannot be decided, the reservation processing unit 340 decides the vehicle 10 to be used in response to the reservation request further based on the control information.

When it is determined that first configuration information is not set as configuration information in S1026, the processing in this flowchart is ended. According to another embodiment, when it is determined that the first configuration information is not set as configuration information in S 1026 (for example, second information is set as the control information), the reservation processing unit 340 may decide the vehicle 10 to be used in response to the reservation request by changing the planned use time of the vehicle 10 included in the reservation request. The reservation processing unit 340 may transfer the processing to S1018 after the vehicle 10 to be used is decided by changing the planned use time of the vehicle 10.

In accordance with the system 5 described above, whether or not the reservation of the reservation target is allowed can be flexibly switched by taking account the characteristic of the reservation target. In the above description, the mode has been mainly described in which the integrated management apparatus 50 includes the calculation unit 300 having the functions of the reservation request acceptance unit 310, the energy request acceptance unit 320, the control information acceptance unit 330, the reservation processing unit 340, the input control unit 350, and the user identification information acquisition unit 360, but a mode may be adopted in which the vehicle management apparatus 60 includes some or all of the functions of the calculation unit 300. The integrated management apparatus 50 may perform the control to execute the functions of the calculation unit 300 by using the functions included in the vehicle management apparatus 60 through the API provided by the vehicle management apparatus 60. The integrated management apparatus 50 may acquire, from the vehicle management apparatus 60, the information required to execute the functions of the calculation unit 300 through the API provided by the vehicle management apparatus 60 to execute the functions of the calculation unit 300. The integrated management apparatus 50 may acquire, from the electric power control apparatus 40, the information required to execute the functions of the calculation unit 300 through the API provided by the electric power control apparatus 40 to execute the functions of the calculation unit 300. The processing described in connection to Fig. 5 to Fig. 10 may be performed in some of the processes in S4012, S4212, S4110, S4112, and S4213 of Fig. 4.

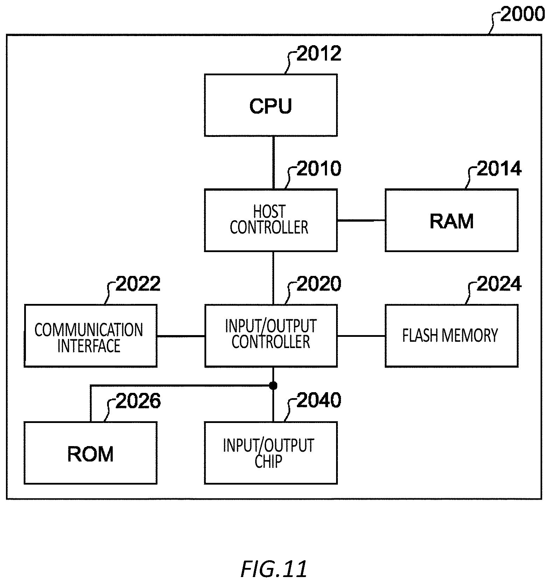

Fig. 11 illustrates an example of a computer 2000 in which a plurality of embodiments of the present invention can be entirely or partially embodied. A program installed in the computer 2000 can cause the computer 2000 to function as the system 5 or each unit of the system 5, or an apparatus such as the electric power control apparatus 40 and the vehicle management apparatus 60 or each unit of the apparatus according to the embodiment and to execute an operation associated with the system or each unit of the system, or the apparatus or each unit of the apparatus, and/or execute a process or a step of the process according to the embodiment. Such a program may be executed by a CPU 2012 in order to cause the computer 2000 to execute a specific operation associated with some or all of the processing procedures and the blocks in the block diagrams described herein.

The computer 2000 according to the present embodiment includes the CPU 2012 and a RAM 2014, which are mutually connected by a host controller 2010. The computer 2000 also includes a ROM 2026, a flash memory 2024, a communication interface 2022, and an input/output chip 2040. The ROM 2026, the flash memory 2024, the communication interface 2022, and the input/output chip 2040 are connected to the host controller 2010 via an input/output controller 2020.

The CPU 2012 operates according to programs stored in the ROM 2026 and the RAM 2014, and thereby controls each unit.

The communication interface 2022 communicates with another electronic device via a network. The flash memory 2024 stores a program and data used by the CPU 2012 in the computer 2000. The ROM 2026 stores a boot program or the like executed by the computer 2000 upon activation, and/or a program which depends on hardware of the computer 2000. The input/output chip 2040 may also connect various input/output units such as a keyboard, a mouse, and a monitor, to the input/output controller 2020 via input/output ports such as a serial port, a parallel port, a keyboard port, a mouse port, a monitor port, a USB port, a HDMI (registered trademark) port.

A program is provided via a network or a computer readable storage medium such as a CD-ROM, a DVD-ROM, or a memory card. The RAM 2014, the ROM 2026, or the flash memory 2024 is an example of the computer readable storage medium. The program is installed in the flash memory 2024, the RAM 2014, or the ROM 2026, and executed by the CPU 2012. Information processing written in these programs is read by the computer 2000, and provides cooperation between the programs and the various types of hardware resources described above. An apparatus or a method may be actualized by executing operations or processing of information according to a use of the computer 2000.

For example, when a communication is executed between the computer 2000 and an external device, the CPU 2012 may execute a communication program loaded on the RAM 2014, and instruct the communication interface 2022 to execute communication processing based on processing written in the communication program. Under the control of the CPU 2012, the communication interface 2022 reads transmission data stored in a transmission buffer processing region provided in a recording medium such as the RAM 2014 or the flash memory 2024, transmits the read transmission data to the network, and writes reception data received from the network into a reception buffer processing region or the like provided on the recording medium.

In addition, the CPU 2012 may cause all or a necessary portion of a file or a database stored in a recording medium such as the flash memory 2024 and the like to be read into the RAM 2014, and execute various kinds of processing on the data on the RAM 2014. Next, the CPU 2012 writes back the processed data into the recording medium.

Various types of information such as various types of programs, data, a table, and a database may be stored in the recording medium and may be subjected to information processing. The CPU 2012 may execute, on the data read from the RAM 2014, various kinds of processing including various kinds of operations, information processing, conditional judgement, conditional branching, unconditional branching, information retrieval/replacement, or the like described herein and specified by instruction sequences of the programs, and write back a result into the RAM 2014. In addition, the CPU 2012 may retrieve information in a file, a database, or the like in the recording medium. For example, when multiple entries each having an attribute value of a first attribute associated with an attribute value of a second attribute, is stored in the recording medium, the CPU 2012 may retrieve an entry having a designated attribute value of the first attribute that matches a condition from these multiple entries, and read the attribute value of the second attribute stored in this entry, thereby obtaining the attribute value of the second attribute associated with the first attribute that satisfies a predetermined condition.

The program or software module described above may be stored in a computer readable storage medium on the computer 2000 or near the computer 2000. A recording medium such as a hard disk or a RAM provided in a server system connected to a dedicated communication network or the Internet can be used as the computer readable storage medium. A program stored in the computer readable storage medium may be provided to the computer 2000 via a network.

Programs which are installed in the computer 2000 and cause the computer 2000 to function as the integrated management apparatus 50 may cause, when executed by the computer, the computer 2000 to function as each unit of the integrated management apparatus 50 by working with the CPU 2012 or the like. When information processing described in these programs are read by the computer 2000, the computer 2000 functions as each unit of the integrated management apparatus 50 that is specific means in which software and various hardware resources described above cooperate with each other. Then, when a calculation or processing of information according to the intended use of the computer 2000 in the present embodiment is realized by the specific means, the unique integrated management apparatus 50 according to the intended use is constructed.

The program installed in the computer 2000 to cause the computer 2000 to function as the vehicle management apparatus 60 may work on the CPU 2012 or the like to cause the computer 2000 to function as each unit of the vehicle management apparatus 60. The information processing described in these programs is read by the computer 2000 to function as each unit of the vehicle management apparatus 60 which is a specific means in which software and the above-described various hardware resources cooperate. Then, when calculation or processing of information according to the intended use of the computer 2000 in the present embodiment is realized by these specific means, the unique vehicle management apparatus 60 according to the intended use is constructed.

Various embodiments have been described with reference to the block diagrams and the like. In the block diagrams, each block may represent (1) a stage of a process in which an operation is executed, or (2) each unit of the apparatus having a role in executing the operation. A specific step and each unit may be implemented by a dedicated circuit, a programmable circuit supplied with computer readable instructions stored on a computer readable storage medium, and/or a processor supplied with computer readable instructions stored on a computer readable storage medium. The dedicated circuit may include a digital and/or analog hardware circuit, or may include an integrated circuit (IC) and/or a discrete circuit. The programmable circuit may include a reconfigurable hardware circuit including logical AND, logical OR, logical XOR, logical NAND, logical NOR, and another logical operation, and a memory element or the like such as a flip-flop, a register, a field programmable gate array (FPGA), a programmable logic array (PLA), or the like.

The computer readable storage medium may include any tangible device capable of storing instructions to be executed by an appropriate device. Thereby, the computer readable storage medium having instructions stored therein forms at least a part of a product including instructions which can be executed to provide means for executing processing procedures or operations specified in the block diagrams. An example of the computer readable storage medium may include an electronic storage medium, a magnetic storage medium, an optical storage medium, an electromagnetic storage medium, a semiconductor storage medium, etc. A more specific example of the computer readable storage medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disk read-only memory (CD-ROM), a digital versatile disk (DVD), a Blu-ray (registered trademark) disk, a memory stick, an integrated circuit card, or the like.

The computer readable instructions may include an assembler instruction, an instruction-set-architecture (ISA) instruction, a machine instruction, a machine-dependent instruction, a microcode, a firmware instruction, state-setting data, or either of source code or object code written in any combination of one or more programming languages including an object-oriented programming language such as Smalltalk (registered trademark), JAVA (registered trademark), and C++, or the like, and a conventional procedural programming language such as a "C" programming language or a similar programming language.

Computer readable instructions may be provided to a processor of a programmable data processing apparatus such as a computer or a programmable circuit, locally or via a local area network (LAN), wide area network (WAN) such as the Internet or the like, and a computer readable instruction may be executed to provide means for executing operations specified in the described processing procedures or block diagrams.

Here, the computer may be a computer such as a personal computer (PC), a tablet computer, smartphone, a work station, a server computer, or a general purpose computer, or may be a computer system in which a plurality of computers are connected. Such computer system to which the plurality of computers are connected is also referred to as a distributed computing system, and is a computer in a broad sense. In a distributed computing system, a plurality of computers collectively execute a program by each of the plurality of computers executing a portion of the program, and passing data during the execution of the program among the computers as needed.

Examples of the processor include a computer processor, a central processing unit (CPU), a processing unit, a microprocessor, a digital signal processor, a controller, a microcontroller, and the like. The computer may include one processor or a plurality of processors. In a multi-processor system including a plurality of processors, the plurality of processors collectively execute a program by each of the processors executing a portion of the program, and passing data during the execution of the program among the processors as needed. For example, in execution of multiple tasks, each of the plurality of processors may execute a portion of each task pieces by pieces by performing task-switching for each time slice. In this case, which portion of one program each processor is responsible for executing dynamically changes. In addition, which portion of the program each of the plurality of processors is to execute may be statically determined by multi-processor aware programming.

While the present invention has been described by way of the embodiments, the technical scope of the present invention is not limited to the above-described embodiments. It is apparent to persons skilled in the art that various alterations or improvements can be made to the above described embodiments. It is also apparent from description of the claims that the embodiments to which such changes or improvements are made may be included in the technical scope of the present invention.

The operations, procedures, steps, and stages etc. of each process performed by an apparatus, system, program, and method shown in the claims, specification, or diagrams can be executed in any order as long as the order is not indicated by "before", "prior to", or the like and as long as the output from a previous process is not used in a later process. Even if the operation flow is described using phrases such as "first" or "next" for the sake of convenience in the claims, specification, or drawings, it does not necessarily mean that the process must be performed in this order.

### EXPLANATION OF REFERENCES

5: system;
10: vehicle;
12: battery;
30, 31: business establishment;
40, 41: electric power control apparatus;
50, 51: integrated management apparatus;
60, 61: vehicle management apparatus;
70: power consumer;
80: power generation apparatus;
90: power network;
140: electric power control apparatus;
180: server;
190: communication network;
200: calculation unit;
210: reservation acceptance unit;
220: planning unit;
280: storage unit;
290: communication unit;
300: calculation unit;
310: reservation request acceptance unit;
320: energy request acceptance unit;
330: control information acceptance unit;
340: reservation processing unit;
350: input control unit;
360: user identification information acquisition unit;
380: storage unit;
390: communication unit;
2000: computer;
2010: host controller;
2012: CPU;
2014: RAM;
2020: input/output controller;
2022: communication interface;
2024: flash memory;
2026: ROM; and
2040: input/output chip.

A control system processes reservations of a plurality of reservation targets. The control system includes a storage unit which stores characteristic information which indicates a characteristic of each of the plurality of reservation targets, a control information acceptance unit which accepts control information for processing the reservations of the plurality of reservation targets by taking into account the characteristics of the plurality of reservation targets, a reservation request acceptance unit which accepts a reservation request related to at least any of the plurality of reservation targets, and a reservation processing unit which allows, when the control information is first information, a reservation of a reservation target having a first characteristic based on the characteristic information and does not allow, when the control information is second information, the reservation of the reservation target having the first characteristic.

## Claims

1. A control system which processes reservations of a plurality of reservation targets, the control system comprising:
a storage unit which stores characteristic information which indicates a characteristic of each of the plurality of reservation targets;
a control information acceptance unit which accepts control information for processing the reservations of the plurality of reservation targets by taking into account the characteristics of the plurality of reservation targets;
a reservation request acceptance unit which accepts a reservation request related to at least any of the plurality of reservation targets; and
a reservation processing unit which allows, when the control information is first information, a reservation of a reservation target having a first characteristic based on the characteristic information and does not allow, when the control information is second information, the reservation of the reservation target having the first characteristic.

2. The control system according to claim 1, wherein
the plurality of reservation targets are vehicles.

3. The control system according to claim 2, wherein
the characteristics of the plurality of reservation targets are types of power of the vehicles.

4. The control system according to claim 3, wherein
the reservation request includes at least a planned use time of the vehicle.

5. The control system according to claim 4, wherein
when a vehicle to be used cannot be decided in response to the reservation request, in a case where the control information is the second information, the reservation processing unit decides a vehicle to be used in response to the reservation request by performing at least a change of the planned use time of the vehicle.

6. The control system according to claim 4, wherein
to decide a vehicle to be used in response to the reservation request, the reservation processing unit holds held information including
information indicating a vehicle to be used,
information indicating a use time of the vehicle to be used, and
information indicating at least one of: a starting point and a destination; a planned travel distance; a planned travel time; or a planned energy use amount of the vehicle to be used.

7. The control system according to claim 6, wherein
the reservation processing unit predicts a transition of an energy amount available for travel of the vehicle based on the held information and decides the vehicle to be used in response to the reservation request based on the transition that is predicted of the energy amount available for the travel of the vehicle.

8. The control system according to any one of claims 3 to 7, further comprising:
an energy request acceptance unit which accepts energy request information related to a request of energy that is to be provided from the vehicle, wherein
the reservation processing unit decides the vehicle to be used in response to the reservation request by taking into account the energy request information.

9. The control system according to claim 8, wherein
the energy request information includes information indicating an energy amount and information indicating a time at which the energy is requested.

10. The control system according to claim 8 or 9, wherein
the reservation processing unit sets a reservation of a vehicle to be used to perform energy transfer in at least one vehicle based on the energy request information.

11. The control system according to claim 10, wherein
when the vehicle to be used in response to the reservation request and the vehicle to be used to perform the energy transfer cannot be decided, the reservation processing unit decides the vehicle to be used in response to the reservation request further based on the control information.

12. The control system according to any one of claims 1 to 11, further comprising:
an input control unit which performs control for a user to input the control information.

13. The control system according to claim 12, wherein
the input control unit performs control to input the control information through a user interface which is different from a user interface through which the reservation request is accepted.

14. A control method for processing reservations of a plurality of reservation targets, the control method comprising:
storing characteristic information which indicates a characteristic of each of the plurality of reservation targets;
accepting control information for processing the reservations of the plurality of reservation targets by taking into account the characteristics of the plurality of reservation targets;
accepting a reservation request related to at least any of the plurality of reservation targets; and
allowing, when the control information is first information, a reservation of a reservation target having a first characteristic based on the characteristic information and not allowing, when the control information is second information, the reservation of the reservation target having the first characteristic.

15. A program which, when executed by a computer, causes the computer to function as the control system according to any one of claims 1 to 13.
